# EUROPEAN PATENT APPLICATION

(11) **EP 4 841 217 A1**
(43) Date of publication of application: **18.11.2026**
(21) Application number: 25859488.6
(22) Date of filing: 02.09.2025
(51) Int. Cl.: G01D 11/30, G01D 11/00, F17D 5/00

(54) **MOUNTING STRUCTURE FOR NON-METALLIC ELASTIC PROBE FOR INSPECTION IN PIPE, AND PROBE**

(30) Priority: 02.09.2024 CN 202411215113
(71) Applicant: China Oil & Gas Pipeline Network Corporation, Beijing 100013 (CN); Pipechina Institute of Science and Technology, Tianjin 300450 (CN)
(72) Inventor: QIU, Honghui, Tianjin 300450 (CN); CHEN, Pengchao, Tianjin 300450 (CN); ZHENG, Jianfeng, Tianjin 300450 (CN); WANG, Kaimeng, Tianjin 300450 (CN); DUAN, Jinyao, Tianjin 300450 (CN); WANG, Yanan, Tianjin 300450 (CN)
(74) Representative: Cabinet Camus Lebkiri
(86) International application number: PCT/CN2025/118448
(87) International publication number: WO 2026/046416

(57) **Abstract**

A mounting structure for a non-metallic elastic probe for inspection in a pipe, said structure comprising: a measurement housing (1) and a probe arm (2) having one end fixedly connected to the measurement housing (1). The measurement housing (1) is provided with a holding recess (11), the holding recess (11) being used to fix an electronic measurement part of a probe. The measurement housing (1) and the probe arm (2) are both non-metallic elastic rods, and the end of the probe arm (2) connected to the measurement housing (1) is provided with an elastic bending recess (3), and the elastic bending recess (3) passes through all three adjacent side surfaces of the probe arm (2). Further disclosed is a probe comprising a mounting structure for a non-metallic elastic probe for inspection in a pipe.

## Description

The present disclosure claims priority to Chinese Patent Application No. 202411215113.3, filed on September 2, 2024, the entire contents of which are incorporated herein by reference in its entirety.

### TECHNICAL FIELD

The present disclosure relates to the field of pipeline inspection device technologies, and in particular, to a mounting structure for a non-metallic elastic probe for pipeline inner inspection, and a probe.

### BACKGROUND

Pipeline inspection technologies may be divided into pipeline inner inspection technology and pipeline outer inspection technology. Pipeline inner inspection is an inspection performed by an inspection device (e.g., a detector) that runs inside the pipeline and may collect and record pipeline information in real time. It may be possible to detect and record a pipeline wall thickness, a pipe diameter, a shape, a pipeline route, and a pipeline corrosion condition through pipeline inner inspection. Pipeline inner inspection occupies a dominant position in pipeline inspection due to a fact that pipeline inner inspection has advantages of accuracy, high efficiency, low missed detection rate, and high degree of automation compared with pipeline outer inspection.

### SUMMARY

In an aspect, the present disclosure provides a mounting structure for a non-metallic elastic probe for pipeline inner inspection. The mounting structure for the non-metallic elastic probe for pipeline inner inspection includes a measurement housing and a probe arm having an end fixedly connected to the measurement housing. The measurement housing is provided with a storage groove, and the storage groove is used for fixing an electronic measurement portion of a probe. The measurement housing and the probe arm are non-metallic elastic rods, and the end of the probe arm connected to the measurement housing is provided with an elastic bending groove, and the elastic bending groove penetrates three adjacent side surfaces of the probe arm.

In some embodiments, the probe arm is a non-metallic elastic rod made of polyurethane or rubber.

In some embodiments, a depth of the elastic bending groove is a half of a thickness of the probe arm.

In some embodiments, inner walls of the elastic bending groove close to and away from the measurement housing are inclined surfaces facing toward a groove bottom and approaching each other.

In some embodiments, the storage groove is filled with a pressure-resistant sealing layer for sealing the electronic measurement portion of the probe.

In some embodiments, a side wall of the measurement housing is provided with a plurality of circuit board fixing snap holes penetrating the side wall, and the circuit board fixing snap holes communicate with the storage groove.

In some embodiments, a side wall of the measurement housing is provided with a plurality of circuit board fixing snap holes penetrating the side wall, and the circuit board fixing snap holes communicate with the storage groove.

In some embodiments, a side wall of the measurement housing close to the probe arm is provided with a wire outlet hole penetrating the side wall, and the wire outlet hole communicates with the storage groove and the elastic bending groove.

In some embodiments, the wire outlet hole and the probe arm are arranged in a staggered manner.

In some embodiments, another end of the probe arm is provided with a plurality of fixing holes penetrating the probe arm.

In another aspect, the present disclosure provides a probe. The probe includes the mounting structure for the non-metallic elastic probe for pipeline inner inspection as described above.

### BRIEF DESCRIPTION OF THE DRAWINGS

In order to illustrate the technical solutions in the present disclosure more clearly, the accompanying drawings required to be used in some embodiments of the present disclosure will be introduced briefly below. However, the accompanying drawings in the following description are merely drawings of some embodiments of the present disclosure, and for those of ordinary skill in the art, other drawings may further be obtained based on these drawings.
FIG. 1 is an axonometric view of a mounting structure for a non-metallic elastic probe for pipeline inner inspection according to some embodiments of the present disclosure.
FIG. 2 is a side view of the mounting structure for the non-metallic elastic probe for pipeline inner inspection shown in FIG. 1.
FIG. 3 is a partial view of a structure of a mounting structure for a non-metallic elastic probe for pipeline inner inspection according to some embodiments of the present disclosure.
FIG. 4 is an exploded view of the mounting structure for the non-metallic elastic probe for pipeline inner inspection shown in FIG. 3.
FIG. 5 is an enlarged view of a portion A of FIG. 4.

In the drawings, the reference numerals denote following components:
1 - measurement housing; 11 - storage groove; 12 - circuit board fixing snap hole; 13 - wire outlet hole; 2 - probe arm; 21 - fixing hole; 3 - elastic bending groove; 31 - inclined surface; 4 - cover plate; 5 - insertion rod; 51 - elastic block; 6 - insertion slot; 61 - arc groove; 7 - elastic clamping plate; 71 - arc block.

### DETAILED DESCRIPTION

In order to enable those skilled in the art to better understand the technical solutions of the embodiments of the present disclosure, the technical solutions in the embodiments of the present disclosure will be described below with reference to the accompanying drawings in the embodiments of the present disclosure.

In the description of the present disclosure, unless otherwise specified, the symbol "/" indicates an "or" relationship, for example, A/B may mean A or B. The term "and/or" herein merely indicates an association relationship describing associated objects, meaning that three relationships may exist, for example, A and/or B may mean: only A, only B, and both A and B. In addition, "at least one" and "a/the plurality" mean that the number of the defined objects is two or more. Wordings such as "first" and "second" do not limit the number or order of execution of the defined objects, nor do they necessarily require that the corresponding objects are different from each other.

It should be understood that the terms "center", "upper", "lower", "front", "rear", "inner", "outer", etc. indicate positional or orientational relationships based on the positional or orientational relationships shown in the drawings. These terms are only for the convenience of describing the present disclosure and simplifying the description, rather than indicating or implying that the apparatus or element referred to must have a particular orientation, be constructed and operated in a particular orientation, and therefore should not be construed as limiting the present disclosure.

In the description of the present disclosure, it should be noted that, unless otherwise expressly specified and limited, the terms "mounting" and variations thereof, "connected" and variations thereof, "coupling" and variations thereof should be understood in a broad sense. For example, "coupling" may be a fixed connection, a detachable connection, or an integral connection; it may be a mechanical connection or an electrical connection; "connected" may be a direct connection or an indirect connection via an intermediate medium, or it may be internal communication between two elements. For those of ordinary skill in the art, the specific meanings of the above terms in the present disclosure may be understood according to the specific circumstances.

In the description of the present specification, features, structures, materials, or characteristics may be combined in any suitable manner in any one or more embodiments or examples.

The principles and features of the present disclosure are described below, and the examples given are only for explaining the present disclosure and are not intended to limit the scope of the present disclosure.

In scenarios where pipeline inspection technology is required (e.g., petrochemical pipeline storage and transportation), pipeline inner inspection occupies a dominant position in pipeline inspection due to a fact that pipeline inner inspection has advantages of accuracy, high efficiency, low missed detection rate, and high degree of automation compared with pipeline outer inspection.

At present, probes of pipeline inner inspection devices generally adopt a metal segmented chain structure, with springs to make them fit an inner wall of the pipeline. In situations where an inspection device runs at high speed and with strong vibration, metal components have a high failure rate, which greatly affects an inspection quality.

Therefore, the present disclosure provides a mounting structure for a non-metallic elastic probe for pipeline inner inspection. The mounting structure for the non-metallic elastic probe for pipeline inner inspection includes a measurement housing and a probe arm having an end fixedly connected to the measurement housing. The measurement housing is provided with a storage groove, and the storage groove is used for fixing an electronic measurement portion of a probe. Both the measurement housing and the probe arm are non-metallic elastic rods, and the end of the probe arm connected to the measurement housing is provided with an elastic bending groove, and the elastic bending groove simultaneously penetrates three adjacent side surfaces of the probe arm.

Since the probe is installed in a pipeline inner inspection device, at positions where an inner diameter decreases and at bends, the probe may fit well against an inner wall of the pipeline, so as to complete an inspection function. When the probe runs at high speed, even if affected by internal defects, weld misalignment, or impact from other foreign objects, due to a provision of the elastic bending groove, the probe can undergo elastic deformation, thereby providing impact buffering and circumferential displacement capability, which fully protects a sensing measurement portion, effectively protects a sensing circuit, and increases operational reliability.

In some implementations, the mounting structure for the non-metallic elastic probe for pipeline inner inspection involved in the embodiments of the present disclosure may be described with reference to the following.

### Embodiment 1

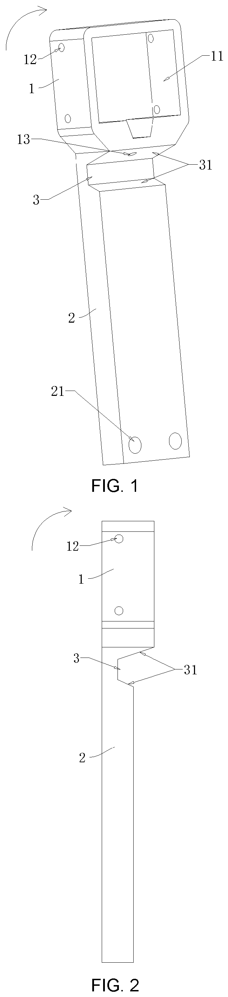

FIG. 1 is an axonometric view of a mounting structure for a non-metallic elastic probe for pipeline inner inspection according to the embodiments of the present disclosure; and FIG. 2 is a side view of the mounting structure for the non-metallic elastic probe for pipeline inner inspection shown in FIG. 1. As shown in FIGS. 1 and 2, the mounting structure for the non-metallic elastic probe for pipeline inner inspection includes a measurement housing 1 and a probe arm 2 having an end fixedly connected to the measurement housing 1. The measurement housing 1 is provided with a storage groove 11, and the storage groove 11 is used for fixing an electronic measurement portion of a probe. Both the measurement housing 1 and the probe arm 2 are non-metallic elastic rods, and the end of the probe arm 2 connected to the measurement housing 1 is provided with an elastic bending groove 3, and the elastic bending groove 3 simultaneously penetrates three adjacent side surfaces of the probe arm 2.

In some embodiments, the electronic measurement portion of the probe may be fixed in the storage groove 11 through a snap-fitting manner. In some embodiments, the electronic measurement portion of the probe may also be fixed in the storage groove 11 through a welding manner or a screw clamping manner, and the present disclosure does not limit the fixing manner.

In some embodiments, the electronic measurement portion of the probe may be a sensor for detecting conditions inside the pipeline. For example, the electronic measurement portion may detect and record a pipeline wall thickness, a pipe diameter, a shape, a pipeline route, a pipeline corrosion condition, etc. In some embodiments, the electronic measurement portion may be a piezoresistive sensor, an infrared sensor, a temperature sensor, a humidity sensor, or combinations thereof, and the present disclosure does not limit thereto.

It can be understood that, with the above arrangement of the mounting structure for the non-metallic elastic probe, the probe is installed in the pipeline inner inspection device, so that at positions where the inner diameter decreases and at bends, the probe may fit well against an inner wall of the pipeline to complete an inspection function. When running at high speed, even if the probe is affected by internal defects, weld misalignment, or impacted by other foreign objects, the provision of the elastic bending groove 3 enables the measurement housing 1 to closely contact the pipe wall, achieving an optimal state for measuring an interior of a pipeline, while allowing the probe to undergo elastic deformation, thereby providing impact buffering and circumferential displacement capability, fully protecting the electronic measurement portion, and improving a reliability of pipeline inner inspection and data integrity.

In some embodiments, the probe arm 2 is fixed to a main body of the pipeline inner inspection device. In some embodiments, the probe arm 2 may be fixed to the main body of the pipeline inner inspection device through a welding manner, and the present disclosure does not limit the fixing manner.

### Embodiment 2

As shown in FIG. 2, on the basis of Embodiment 1 and in combination with FIG. 1, the probe arm 2 is a non-metallic elastic rod made of polyurethane or rubber.

It can be understood that the probe arm 2 made of a non-metallic elastic material (e.g., polyurethane or rubber) has good strength and elasticity, so that an entire probe has excellent elastic deformation capability, thereby providing impact buffering and circumferential displacement capability, effectively protecting an electronic circuit portion, and improving an operational reliability of the probe.

### Embodiment 3

On the basis of Embodiment 1 and Embodiment 2, a depth of the elastic bending groove 3 may be set to a half of a thickness of the probe arm 2.

A beneficial effect of adopting Embodiment 3 is that when the measurement housing 1 is subjected to force, the probe may deform at a certain angle at the elastic bending groove 3.

It can be understood that, in order to adapt to actual application scenarios, the depth of the elastic bending groove 3 may also be set to other values, for example, the depth of the elastic bending groove 3 may be set to one third of the thickness of the probe arm, and the present application does not limit thereto.

### Embodiment 4

As shown in FIG. 1 and FIG. 2, on the basis of Embodiments 1 to 3, the inner walls of the elastic bending groove 3 close to and away from the measurement housing 1 are both inclined surfaces 31 facing toward a groove bottom and approaching each other.

A beneficial effect of adopting Embodiment 4 is that it ensures that an angle of deformation that the probe may undergo at the elastic bending groove 3 is relatively large, satisfying a deformation requirement, thereby adapting to more varied internal conditions of the pipeline and improving a passability of the probe.

In some embodiments, the two inclined surfaces 31 may form a certain angle with each other. For example, extensions of the two inclined surfaces 31 may form an included angle of 60°. In some embodiments, the two inclined surfaces 31 may form different angles with a plane of the elastic bending groove 3. For example, one inclined surface 31 may form an included angle of 120° with the plane of the elastic bending groove 3, while another inclined surface 31 may form an included angle of 135° with the plane of the elastic bending groove 3.

### Embodiment 5

As shown in FIG. 1 and FIG. 2, on the basis of Embodiments 1 to 4, the storage groove 11 is filled with a pressure-resistant sealing layer for sealing the electronic measurement portion of the probe.

A beneficial effect of adopting the preferred solution in the above embodiment is that the electronic measurement portion of the probe is firmly potted in the storage groove 11 through the pressure-resistant sealing layer, so that the probe or the electronic measurement portion of the probe may remain stable after installation.

In some embodiments, the pressure-resistant sealing layer may be made of materials such as polytetrafluoroethylene, or polyurethane, etc.

### Embodiment 6

As shown in FIGS. 1 and 2, on the basis of Embodiments 1 to 5, a side wall of the measurement housing 1 is provided with a plurality of circuit board fixing snap holes 12 penetrating the side wall, and the circuit board fixing snap holes 12 communicate with the storage groove 11.

It can be understood that, a number of the circuit board fixing snap holes 12 is not limited in the present disclosure; for example, the number of the circuit board fixing snap holes 12 may be 2, or the number of the circuit board fixing snap holes 12 may be set according to actual needs.

A beneficial effect of adopting Embodiment 6 is that a circuit board may be clamped and fastened through the circuit board fixing snap holes 12, achieving secure installation, thereby ensuring a stability of the probe installation.

### Embodiment 7

As shown in FIG. 1 and FIG. 2, on the basis of Embodiments 1 to 6, a side wall of the measurement housing 1 close to the probe arm 2 is provided with a wire outlet hole 13 penetrating the side wall, and the wire outlet hole 13 communicates with the storage groove 11 and the elastic bending groove 3. It can be understood that, a number of the wire outlet holes 13 is not limited in the present disclosure; for example, the number of the wire outlet holes 13 may be 1, or the number of the wire outlet holes 13 may be set according to actual needs.

A beneficial effect of adopting Embodiment 7 is that a power and/or a signal wire may be led out through the wire outlet hole 13, thereby improving a space utilization rate and making usage scenarios more flexible.

In some embodiments, the wire outlet hole 13 is a circular hole. In some embodiments, the wire outlet hole 13 may be a square hole or a rectangular hole to allow multiple wires to pass through simultaneously. It can be understood that a shape of the wire outlet hole 13 is not limited by the contents of the present disclosure, and other shapes may exist in actual use to better adapt to the wires or usage scenarios.

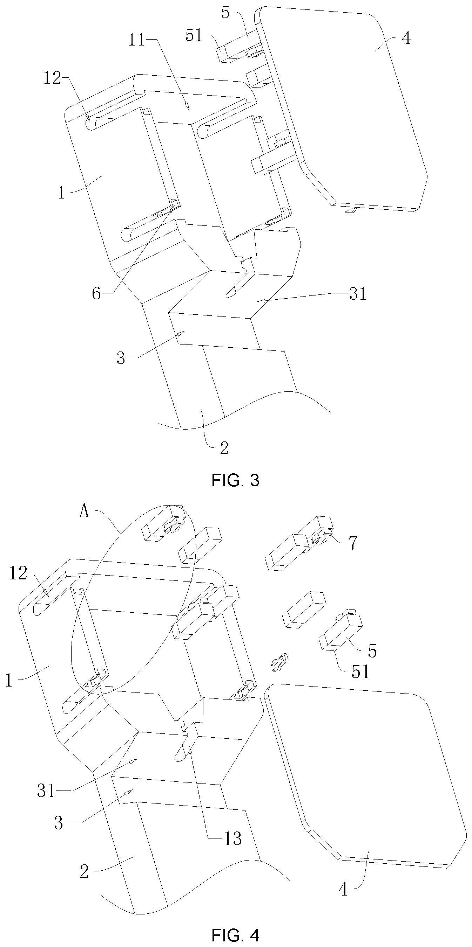

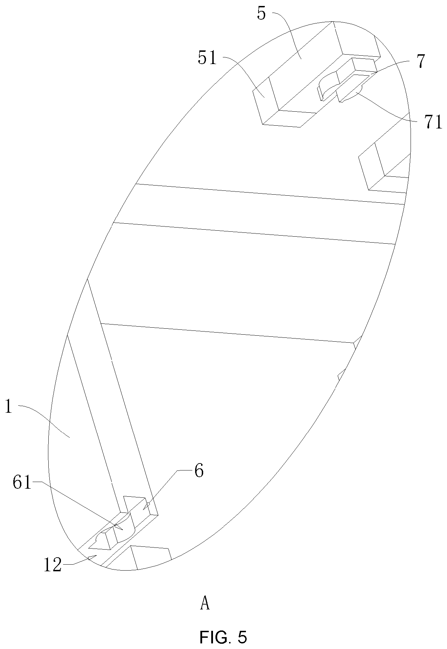

Referring to FIGS. 3 to 5, as a parallel solution, the circuit board fixing snap holes 12 and the wire outlet hole 13 are both through structures penetrating the measurement housing 1 in a direction toward an opening of the storage groove 11, so as to form groove-shaped structures, so that when potting the pressure-resistant sealing layer, the pressure-resistant sealing layer enters the circuit board fixing snap holes 12 and the wire outlet hole 13, thereby improving a sealing degree of the electronic measurement portion of the probe.

On the basis of the above embodiments, the measurement housing 1 is further configured with a cover plate 4. A plurality of insertion rods 5 are fixedly connected to the cover plate 4. An end of each insertion rod 5 is fixedly connected to the cover plate 4, and some of the plurality of the insertion rods 5 are respectively inserted into the circuit board fixing snap holes 12 and the wire outlet hole 13 in a one-to-one adapted manner, so as to cover the pressure-resistant sealing layer, or cover only the electronic measurement portion of the probe, through the cover plate 4.

Other insertion rods 5 extend into the storage groove 11 to press against the pressure-resistant sealing layer, or press only the electronic measurement portion of the probe, thereby achieving fixed installation.

It can be understood that the present disclosure does not limit a connection manner between the cover plate 4 and the main body of the measurement housing 1. In some embodiments, the cover plate 4 is detachably fixed to the main body of the measurement housing 1 through a snap-fitting manner using the insertion rods 5. In some embodiments, the cover plate 4 is directly fixed to the main body of the measurement housing 1 through a welding or an integral manufacturing manner, while the insertion rods 5 only serve some auxiliary functions (e.g., pressing the electronic measurement portion of the probe to enhance installation stability).

Another end of each insertion rod 5 is fixedly connected with an elastic block 51. The elastic block is made of an elastic material. In some embodiments, the elastic block 51 may be made of rubber to form a flexible contact and prevent damage to components.

The measurement housing 1 is provided with a plurality of insertion slots 6, and the plurality of insertion slots 6 respectively communicate with the wire outlet hole 13 and the plurality of circuit board fixing snap holes 12 in a one-to-one correspondence manner, and a slot wall of each insertion slot 6 is provided with an arc groove 61.

A plurality of elastic clamping plates 7 are fixedly connected to the cover plate 4. In some embodiments, the elastic clamping plates 7 may be made of elastic metal material. An end of each elastic clamping plate 7 is fixedly connected to the cover plate 4, and another end of the elastic clamping plate 7 is formed with an arc block 71 adapted to and engaged in the arc groove 61, so as to achieve fixed installation of the cover plate 4 through an engagement of the arc block 71 in the arc groove 61 manner.

When two opposite slot walls of the insertion slot 6 are provided with arc grooves 61 facing each other, the elastic clamping plate 7 is in a "∩" shape, and the arc blocks 71 are arranged facing each other on two cantilever ends of the elastic clamping plate 7.

### Embodiment 8

As shown in FIG. 1 and FIG. 2, on the basis of Embodiments 1 to 7, the wire outlet hole 13 and the probe arm 2 are arranged in a staggered manner.

A beneficial effect of adopting Embodiment 8 is that it ensures that after the power and the signal wire are smoothly led out through the wire outlet hole 13, they will not interfere with the probe arm 2 and will not affect a smooth bending at the elastic bending groove 3.

### Embodiment 9

As shown in FIG. 1 and FIG. 2, on the basis of Embodiments 1 to 8, another end of the probe arm 2 is provided with a plurality of fixing holes 21 penetrating the probe arm.

It can be understood that, the number of the fixing holes 21 is not limited in the present disclosure; for example, the number of the fixing holes 21 may be 2, or the number of the fixing holes 21 may be set according to actual needs.

A beneficial effect of adopting Embodiment 8 is that the mounting structure of the probe may be fixed to the main body of the pipeline inner inspection device by means of screws through the fixing holes 21.

On the other hand, the present disclosure provides a probe, specifically as described below.

### Embodiment 10

A probe, including the mounting structure for the non-metallic elastic probe for pipeline inner inspection according to any one of Embodiments 1 to 9.

In some embodiments, the probe may further include an electronic measurement portion, and a whole is installed on the pipeline inner inspection device.

In the description of the present disclosure, it should be understood that the terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. indicate positional or orientational relationships based on the positional or orientational relationships shown in the drawings, and are only for the convenience of describing the present disclosure and simplifying the description, and do not indicate or imply that the apparatus or element referred to must have a particular orientation, be constructed and operated in a particular orientation, and therefore should not be construed as limiting the present disclosure.

In addition, the terms "first" and "second" are used for descriptive purposes only and should not be construed as indicating or implying relative importance or implicitly indicating the number of the indicated technical features. Thus, features defined with "first" or "second" may explicitly or implicitly include at least one of the features. In the description of the present disclosure, "multiple/a plurality" means at least two, such as two, three, etc., unless otherwise expressly and specifically limited.

In the present disclosure, unless otherwise explicitly specified and limited, a first feature being "on" or "under" a second feature may mean that the first feature and second feature are in direct contact, or that the first feature and second feature are in indirect contact through an intermediate medium. Moreover, a first feature being "above", "over", or "on top of" a second feature may mean that the first feature is directly above or obliquely above the second feature, or merely that the first feature is at a higher level than the second feature. A first feature being "below", "under", or "beneath" a second feature may mean that the first feature is directly below or obliquely below the second feature, or merely that the first feature is at a lower level than the second feature.

In the description of the present specification, references terms such as "one embodiment", "some embodiments", "example", "specific example", or "some examples" mean that the specific features, structures, materials, or characteristics described in connection with that embodiment or example are included in at least one embodiment or example of the present disclosure. In the present specification, the schematic expressions of the above terms are not necessarily directed to a same embodiment or example. Furthermore, the described specific features, structures, materials, or characteristics may be combined in any suitable manner in any one or more embodiments or examples. In addition, those skilled in the art may combine and integrate different embodiments or examples and features of different embodiments or examples described in the present specification, provided they are not mutually contradictory.

Although the embodiments of the present disclosure have been shown and described above, it can be understood that the above embodiments are exemplary and should not be construed as limiting the present disclosure. Those of ordinary skill in the art may make changes, modifications, substitutions, and variations to the above embodiments within the scope of the present disclosure.

## Claims

1. A mounting structure for a non-metallic elastic probe for pipeline inner inspection, comprising a measurement housing (1) and a probe arm (2) having an end fixedly connected to the measurement housing (1), wherein the measurement housing (1) is provided with a storage groove (11), the storage groove (11) being used for fixing an electronic measurement portion of a probe, the measurement housing (1) and the probe arm (2) are non-metallic elastic rods, and the end of the probe arm (2) connected to the measurement housing (1) is provided with an elastic bending groove (3), the elastic bending groove (3) penetrating three adjacent side surfaces of the probe arm (2).

2. The mounting structure for the non-metallic elastic probe for pipeline inner inspection according to claim 1, wherein the probe arm (2) is a non-metallic elastic rod made of polyurethane or rubber.

3. The mounting structure for the non-metallic elastic probe for pipeline inner inspection according to claim 1, wherein a depth of the elastic bending groove (3) is a half of a thickness of the probe arm (2).

4. The mounting structure for the non-metallic elastic probe for pipeline inner inspection according to claim 3, wherein inner walls of the elastic bending groove (3) close to and away from the measurement housing (1) are inclined surfaces (31) facing toward a groove bottom and approaching each other.

5. The mounting structure for the non-metallic elastic probe for pipeline inner inspection according to claim 1, wherein the storage groove (11) is filled with a pressure-resistant sealing layer for sealing the electronic measurement portion of the probe.

6. The mounting structure for the non-metallic elastic probe for pipeline inner inspection according to any one of claims 1 to 5, wherein a side wall of the measurement housing (1) is provided with a plurality of circuit board fixing snap holes (12) penetrating the side wall, the circuit board fixing snap holes (12) communicating with the storage groove (11).

7. The mounting structure for the non-metallic elastic probe for pipeline inner inspection according to any one of claims 1 to 5, wherein a side wall of the measurement housing (1) close to the probe arm (2) is provided with a wire outlet hole (13) penetrating the side wall, the wire outlet hole (13) communicating with the storage groove (11) and the elastic bending groove (3).

8. The mounting structure for the non-metallic elastic probe for pipeline inner inspection according to claim 7, wherein the wire outlet hole (13) and the probe arm (2) are arranged in a staggered manner.

9. The mounting structure for the non-metallic elastic probe for pipeline inner inspection according to any one of claims 1 to 5, wherein another end of the probe arm (2) is provided with a plurality of fixing holes (21) penetrating the probe arm (2).

10. A probe, comprising the mounting structure for the non-metallic elastic probe for pipeline inner inspection according to any one of claims 1 to 9.
